# EUROPEAN PATENT APPLICATION

(11) **EP 4 475 605 A2**
(43) Date of publication of application: **11.12.2024**
(21) Application number: 24170474.1
(22) Date of filing: 16.04.2024
(51) Int. Cl.: H04W 52/02

(54) **MEHTOD AND SYSTEM TO SUPPORT CELL DISCONTINUOUS TRANSMISSION AND RECEPTION AT USER EQUIPMENT**

(30) Priority: 21.04.2023 US 202363461094 P; 15.03.2024 US 202418606528
(71) Applicant: Samsung Electronics Co., Ltd., Suwon-si, Gyeonggi-do 16677 (KR)
(72) Inventor: HU, Liang, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

Methods and apparatuses are provided in which a UE 106 is configured with a cell DTX/DRX configuration defined by a DTX/DRX periodicity, a DTX/DRX starting slot or offset, and a DTX/DRX active period. The cell DTX/DRX configuration is enabled or disabled at the UE 106.

## Description

### TECHNICAL FIELD

The disclosure generally relates to network energy savings in cellular systems. More particularly, the subject matter disclosed herein relates to improvements to cell discontinuous transmission (DTX) and discontinuous reception (DTX).

### SUMMARY

Since the introduction of cellular systems, there has been a consistent trend towards denser networks, wider operating bandwidths, and the utilization of numerous antennas. Consequently, power consumption of cellular networks has steadily increased and now represents a significant portion of an operator's operational expenditures (OPEX). Although power consumption reductions for a user equipment (UE) have been standardized for some time, until recently, there had been minimal efforts to reduce power consumption at the network level. To address this issue, in Release 18, (Rel-18), 3rd Generation Partnership Project (3GPP) commenced a study on reducing power consumption specifically at the network level.

To solve this problem, different time-domain solutions may be provided to achieve network power savings. In particular, the concept of UE connected mode (C)-DRX/DTX may be extended to a base station (BS) (e.g., gNode B (gNB) or cell), and the necessary signaling for the UE to operate in accordance with cell DTX/DRX may be defined.

In particular, one solution is to support the DTX/DRX mode at the gNB and to use the UE C-DTX/DRX mode to synchronize the inactivity periods of the UEs with the gNB. This may be performed semi-statically, by turning on/off the gNB on a predictable cycle, and essentially reusing the concept of DTX/DRX cycles initially defined for the UE at the gNB. This technique may be applicable when traffic is semi-static and predictable. It may also be performed more dynamically (e.g., when traffic is highly variable). In such a case, the gNB may decide when to turn on/off according to the traffic demand, and the informs the UE.

One issue with the above approach is that when a DTX/DRX mechanism is introduced to enable network energy savings, a UE needs to be aware of what to transmit or listen to during an inactive period of the cell DTX cycle, and how to handle ongoing transmissions. For example, it should be determined whether all transmissions are stopped at the UE, or whether some transmissions (e.g., reference signals) may still occur. Additionally, it should be determined how to handle packets being transmitted, but for which an ACK has not yet been received.

To overcome these issues, systems and methods are described herein for defining UE behavior when the cell enters the inactive period of the DTX cycle. In particular, UE behavior and procedures are addressed for when cell DTX/DRX is in operation and/or when UE DRX is configured, and as well as potential channel/signal design and mechanisms and uplink procedures (e.g., UE request or assistance feedback) related to cell DTX/DRX.

In addition, it may be infeasible for a gNB to reconfigure every UE's DRX configuration to align with the cell DTX/DRX, since the determination of a UE's DRX configuration may also involve a core network and may be adapted to the UE's service characteristics. Thus, both cell DTX/DRX and UE C-DRX may coexist and work jointly.

The above approaches improve on previous methods because they define different gNB behaviors in cell DTX/DRX. New UE behaviors may be defined for different cell DTX/DRX cases. Specifically, it may be determined which configured downlink (DL) and uplink (UL) resources may be assumed to be deactivated/suspended during cell DTX and DRX (e.g., physical downlink control channel (PDCCH), physical downlink shared channel (PDSCH), physical uplink shared channel (PUSCH), physical random access channel (PRACH), physical uplink control channel (PUCCH)). It may be determined which UE-specific DL and UL signals may be assumed as deactivated/suspended during cell DTX and DRX (e.g., channel status information (CSI)-reference signal (RS) and sounding reference signal (SRS)). It may be determined how to handle critical signal/channel transmission, which may not end in the cell DTX/DRX active period (e.g., PDCCH monitoring for receiving system information, PDCCH monitoring for receiving paging early indication, tracking reference signal (TRS), synchronization signal block (SSB), SRS occasions, etc.). It may further be determined how to handle exceptions of DL and UL transmissions in cell DTX/DRX assumptions (e.g., gNB suspend cell DTX/DRX operation during random access (RA)), when there is data to be transmitted with a tight latency requirement. It may also be determined how to design UE assistance information for DTX/DRX, and how to handle the cell DTX/DRX and UE C-DRX misalignment.

In an embodiment, a method is provided in which a BS configures a UE with a cell DTX/DRX configuration defined by a DTX/DRX periodicity, a DTX/DRX starting slot or offset, and a DTX/DRX active period. The BS enables or disables the cell DTX/DRX configuration at the UE.

In an embodiment, a method is provided in which a UE receives a cell DTX/DRX configuration from a BS. The cell DTX/DRX configuration is defined by a DTX/DRX periodicity, a DTX/DRX starting slot or offset, and a DTX/DRX active period. A signal is received from the BS that enables or disables the cell DTX/DRX configuration at the UE. The cell DTX/DRX configuration is enabled or disabled at the UE based on the signal.

In an embodiment, a UE is provided that includes a processor and a non-transitory computer readable storage medium storing instructions. When executed, the instructions cause the processor to receive a cell DTX/DRX configuration from a BS. The cell DTX/DRX configuration is defined by a DTX/DRX periodicity, a DTX/DRX starting slot or offset, and a DTX/DRX active period. The instructions also cause the processor to receive, from the BS, a signal to enable or disable the cell DTX/DRX configuration at the UE, and enable or disable the cell DTX/DRX configuration at the UE based on the signal.

In an embodiment, a BS is provided that includes a processor and a non-transitory computer readable storage medium storing instructions. When executed, the instructions cause the processor to configure a UE with a cell DTX/DRX configuration. The cell DTX/DRX configuration is defined by a DTX/DRX periodicity, a DTX/DRX starting slot or offset, and a DTX/DRX active period. The instructions also cause the processor to enable or disable the cell DTX/DRX configuration at the UE.

### BRIEF DESCRIPTION OF THE DRAWINGS

In the following section, the aspects of the subject matter disclosed herein will be described with reference to exemplary embodiments illustrated in the figures, in which:
FIG. 1 is a diagram illustrating a communication system, according to an embodiment;
FIG. 2 is a diagram illustrating a cell DTX and DRX pattern defined by parameters, according to an embodiment;
FIG. 3 is a diagram illustrating a defined subset of PDCCH occasions with a short duty cycle within the cell DTX inactive period, according to an embodiment;
FIG. 4 is a flowchart illustrating a method for UE to receive urgent data in configured PDCCH occasions during a cell DTX inactive period, according to an embodiment;
FIG. 5 is a diagram illustrating defined UL WUS occasions with a short duty cycle within the cell DRX inactive period, according to an embodiment;
FIG. 6 is a diagram illustrating HARQ handling with respect to cell DTX, according to an embodiment;
FIG. 7 is a diagram illustrating HARQ handling with respect to cell DTX, according to another embodiment;
FIG. 8 is a diagram illustrating misalignment of cell DTX/DRX and UE C-DRX cycles, according to an embodiment;
FIG. 9 is a flowchart illustrating a method for cell DTX/DRX configuration at a UE, according to an embodiment; and
FIG. 10 is a block diagram of an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As described herein, the expression "DTX/DRX" is used to refer to "DTX or DRX". In addition, the order of "DTX" and "DRX" may be interchangeable. For example, "DTX/DRX" may mean "DRX/DTX", "DTX or DRX" or "DRX or DTX". The terms "base station", "BS", "gNodeB", "gNB", "access point", "AP", and "cell" may be used interchangeably herein.

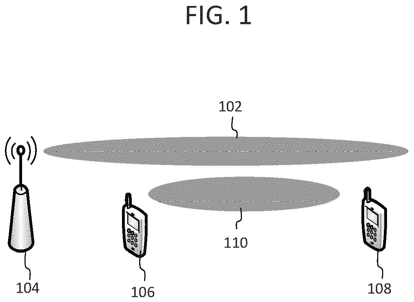

FIG. 1 is a diagram illustrating a communication system, according to an embodiment. In the architecture illustrated in FIG. 1, a control path 102 may enable the transmission of control information through a network established between a BS, access point (AP), or a gNB 104, a first UE 106, and a second UE 108. A data path 110 may enable the transmission of data (and some control information) between the first UE 106 and the second UE 108. The control path 102 and the data path 110 may be on the same frequency or may be on different frequencies.

New radio (NR) UE DRX (e.g., as described in 3GPP technical specification (TS) 38.321) is a mechanism introduced in the early stage of long-term evolution (LTE) and carried over to NR to prolong the battery life of a UE by reducing power consumption. In the absence of DRX, the UE is constantly required to monitor the PDCCH for downlink (DL) assignments or uplink (UL) grants, which drains the battery quickly. However, with DRX configured in a radio resource control (RRC) connected mode, the network instructs the UE when it should monitor the PDCCH, leading to power savings.

A DRX configuration includes parameters such as a DRX short cycle and a DRX long cycle, which are collectively referred to as a DRX cycle. Within each DRX cycle, there is an on or active period during which the UE's medium access control (MAC) entity monitors the PDCCH. The duration of the active period may be determined by a drx-onDurationTimer. A drx-SlotOffset may specify the delay from the start of the DRX cycle until beginning the drx-onDurationTimer. The initiation of a new DRX cycle may depend on whether the UE has received a new DL assignment or UL grant within a specific time defined by a drx-InactivityTimer, which restarts whenever the PDCCH indicates a new transmission.

In addition to the timers associated with DRX, there are also timers related to hybrid automatic repeat request (HARQ) and its retransmissions. These timers, which are specific to each HARQ process, may also influence the UE's PDCCH monitoring behavior and power-saving opportunities. For example, when a MAC protocol data unit (PDU) is received in a configured DL assignment, a drx-HARQ-RTTTimerDL may activated for the corresponding HARQ process. If neither the drx-InactivityTimer nor the drx-onDurationTimer is running, the UE may avoid monitoring the PDCCH. However, if the drx-HARQ-RTTTimerDL expires and the data of the corresponding HARQ process was not successfully decoded, the drx-RetransmissionTimerDL may be initiated, and the UE monitors the PDCCH.

Furthermore, the UE may receive a DRX command MAC control element (CE) or a long DRX command MAC CE. Upon receiving either of these MAC CEs, the UE may switch to using a short DRX cycle or a long DRX cycle, depending on the received MAC CE and whether a short DRX was configured for the UE. If the UE is not configured with a short DRX cycle but receives a DRX command MAC CE, it may initiate the long DRX cycle. The availability of both short DRX and long DRX cycles may allow for a balance between power savings in the UE and the delay associated with delivering UL or DL data when it becomes available.

To further optimize power consumption, the network may configure the UE to limit channel state information (CSI) reporting to occur only during the active periods of the DRX. However, regardless of PDCCH monitoring, the MAC entity transmits HARQ feedback and an aperiodic SRS when expected.

Accordingly, the UE C-DRX configuration may be a UE-specific RRC configuration. When there is a larger number of C-DRX configurations for UEs, the existing RRC signaling may create a significant amount of overhead and it may be slow since the gNB configures each serving UE separately. In addition, the gNB may not be able to enter the sleep mode during a time when it sequentially configures a C-DRX pattern for each UE.

The UE DRX ceases when the UE has not received data for a fixed amount of time, and thus, the active/inactive time is dependent on the cycle. This is a key difference between the cell DTX when active/inactive periods are fixed. For example, if there is physical downlink channel (PDCH) activity during an active period, the device may be scheduled again. If the UE goes into a DRX sleep state, it may not receive the scheduled grants/assignments. Accordingly, 3GPP has defined the DRX inactivity timer (drx-InactivityTimer) to keep the UE in an active state after being scheduled. The UE may start/restart this timer every time PDCCH indicates a new UL or DL transmission, and the UE may stay in an active state and keep monitoring for PDCCH until the expiry of the drx-InactivityTimer.

A high-level view of cell DTX/DRX signaling is proposed in 3GPP TS 38.321. When a UE enters a connected mode, it may indicate to a gNB that it supports cell DTX/DRX via UE capability reporting at the RRC. The gNB may configure the UE with one or more cell DTX/DRX configurations (e.g., a periodic pattern) in advance. If multiple configurations are supported, each configuration may be identified by a configuration ID.

When the load is low and the cell DTX/DRX configuration meets a quality of service (QoS) of the UEs or group of UEs in the cell, the gNB may trigger the UE to begin applying a cell DTX/DRX configuration (i.e., the cell DTX/DRX pattern) using the dynamic (group) L1/L2 indication. If multiple configurations are supported, the indication may include the configuration ID. When the load is normal and/or the cell DTX/DRX configuration is no longer acceptable to the QoS of the UEs or group of UEs in the cell, the gNB may indicate to the UE to stop applying the cell DTX/DRX configuration using the dynamic (group) L1/L2 indication.

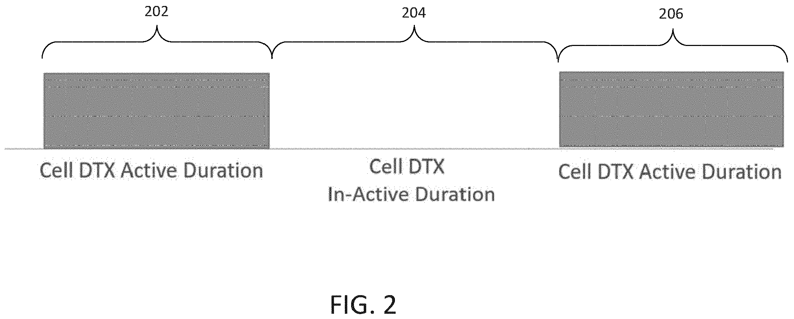

FIG. 2 is a diagram illustrating a cell DTX and DRX pattern defined by parameters, according to an embodiment. A first cell DTX active period 202 is followed by a cell DTX inactive period 204, which is followed by a second cell DTX active period 206. The defining parameters may include one or more of, for example, periodicity, start slot/offset, active period (e.g., on duration), and a flag that indicates which option of cell DTX and DRX pattern is used.

The cell DTX/DRX pattern may be differently defined than a UE C-DTX/DRX pattern. For a UE, with a DTX/DRX timer, an active period may vary from cycle to cycle. This occurs because, before transitioning between active and inactive periods, the UE must not receive anything for a given duration, and this duration may be re-initialized each time the UE receives something, as described above. The cell DTX duration cycle differs in that the active/inactive periods may be fixed and signaled to the UE. The active/inactive periods may be independent from the reception of transmissions at a BS or gNB from UE(s). Thus, UEs may accommodate their transmission timelines when they are aware that the gNB will transition between active/inactive periods.

Three cases of gNB behavior in a cell DTX/DRX inactive period may be possible. In a first case, a gNB may be expected to turn off transmission and reception for all data traffic and reference signals during the cell DTX/DRX inactive periods. In a second case, the gNB may be expected to turn off transmission and reception only for data traffic during the cell DTX/DRX inactive periods (i.e., the gNB may still transmit or receive RSs). In a third case, the gNB may be expected to only transmit RSs (e.g., CSI-RS for measurement).

Depending on the network configuration, the gNB may operate in one of the above-described cases and indicate the operation mode to the serving UEs and/or RRC inactive/idle UEs via RRC signaling or L1/L2 signaling. Alternatively, the UE may be hard-coded or directed by the standards to use a specific one of the above-described cases.

The first case may provide the maximum network energy gain since transmission and reception are not occurring during the cell DTX/DRX inactive periods. To perform the cell DTX/DRX configuration, the configuration must also meet the UEs' QoS and radio resource management (RRM) requirement in the cell (e.g., all UEs or the group of UEs in the cell have delay-tolerant traffic QoS and the UEs do not need to perform much RRM and scheduling measurement (e.g., stationary or pseudo-stationary)).

The second and third cases may assume that all UEs or the group of UEs in the cell need to perform RRM and/or DL/UL scheduling measurement due to mobility. When compared to the first case, less network energy gain may be achieved since a network may still have to transmit and/or receive RSs.

When the first case is expected, a periodic pattern configuration of cell DTX and DRX are configured to the UE, and the UE is informed to apply the periodic cell DTX/DRX pattern. The UE may not be required to monitor occasions and may not transmit on the occasions falling outside of the cell DTX/DRX active period. In some cases, some critical periodic signal/channel transmissions may not end in the cell DTX/DRX active period (e.g., PDCCH monitoring for receiving system information, PDCCH monitoring for receiving paging early indication, TRS, SSB, SRS occasions, etc.). For such cases, it may be expected that the gNB align these critical signal/channel transmission/reception occasions during the cell DTX/DRX active period. Such an alignment may be performed when the gNB indicates to the UE to apply the cell DTX/DRX pattern, and the UE may apply the reconfiguration to identify the valid monitoring occasions in DL and/or transmission occasions in UL for those critical signal s/channels.

For example, the reconfiguration may include one or more shifts that are to be applied to one or more monitoring or transmission occasions of an existing configuration (i.e., new occasions are derived from the existing configuration), or may include explicit configurations related to occasions to arrive at the transmission or reception occasions within the cell DTX/DRX active period.

UE behaviors for the above-described cases are provided below in Table 1 for cell DTX.

**Table 1**

| | Network behavior in cell inactive periods | UE behaviors in cell inactive periods |
|---|---|---|
| Case 1 | No DL transmission at all. | Stop detecting SSB occasions in off duration (network may still transmit SSBs within cell DTX off duration in some conditions). |
| | | Stop monitoring PDCCH. |
| | | Stop CSI measurement and beam management. |
| | | Suspend UL grant/random access channel (RACH). |
| | | UE behaviors defined for exception cases of random access. |
| Cases 2 and 3 | No transmission of DL data traffic. DL reference signals are still transmitted. | Stop monitoring PDCCH. |
| | | Suspend UL grant/RACH. |

UE behaviors for the above-described cases are shown below in Table 2 for Cell DRX.

**Table 2**

| | Network behavior in cell inactive periods | UE behaviors in cell inactive periods |
|---|---|---|
| Cases 1 and 3 | No UL reception at all. | Stop transmitting PRACH. |
| | | Suspend configured grant (CG)-PUSCH transmissions. |
| | | Suspend scheduling request (SR) transmissions. |
| | | Suspend periodic and semi-persistent CSI report. |
| | | Suspend periodic and semi-persistent SRS transmissions. |
| | | Suspend HARQ acknowledgements |
| | | UE behaviors defined for exception cases of UL transmission with low latency requirement. |
| Case 2 | No reception of UL data traffic. UL reference signals are still received. | Stop transmitting PRACH. |
| | | Suspend CG-PUSCH transmissions. |
| | | Suspend SR transmissions. |
| | | Suspend periodic and semi-persistent CSI report. |
| | | Suspend HARQ acknowledgements |
| | | UE behaviors defined for exception cases of UL transmission with low latency requirement. |

One cell DTX/DRX case may include one set of RRC configurations of UE transmission and reception behaviors per MAC entity, and may be RRC pre-configured to serving UEs, which may then be activated by L1/L2 signaling. For example, fields may be configured for one set of configurations. The configured fields may include an indication on whether to monitor PDCCH (i.e., whether dynamic grant transmission/reception is allowed), indexes of activated or muted CG-PUSCH configurations, indexes of activated or muted standard positioning signal (SPS) configurations, indexes of activated or muted RACH configurations, and indexes of activated or muted SR configurations.

Exceptional cases may occur in which the UE and the BS or gNB do not follow the cell DTX pattern and cell DRX pattern. A network may schedule the UE as soon as possible according to the configured PDCCH occasions (e.g., when the UE is performing RA), when data to be transmitted has a tight latency requirement.

For example, when the UE is performing an RA procedure, both the UE and a gNB may perform the legacy 4 step or 2 step RACH procedures by disregarding the cell DTX and cell DRX configurations. In this regard, the gNB and the UE may continue to exchange the legacy Msg1/Msg2/Msg3/Msg4 for RA even within the cell DTX/DRX inactive period. Specifically, the UE may continue to monitor the PDCCH for Msg2 (a random access response(RAR)) and/or Msg4 (a contention resolution message).

In another example, if there is urgent DL data in a cell DTX inactive duration, the UE may be configured by the gNB to monitor a subset of PDCCH occasions within the cell DTX inactive period to deal with potential urgent DL data reception (i.e., the UE is not completely off for monitoring PDCCH occasions during the cell DTX inactive period).

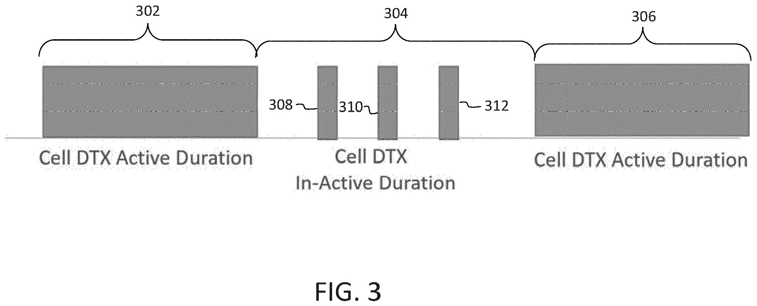

FIG. 3 is a diagram illustrating a defined subset of PDCCH occasions with a short duty cycle within the cell DTX inactive period, according to an embodiment. A first cell DTX active period 302 is followed by a cell DTX inactive period 304, which is followed by a second cell DTX active period 306. Within the cell DTX inactive period 304 are a subset of three PDCCH occasions 308, 310, and 312. This low latency opportunity (LLO) cycle per cell DTX inactive period may be defined by one or more of a Periodicity_LLO parameter, a start slot/offset_LLO parameter, an active period_LLO parameter, and a flag that indicates which option of LLO patterns is used.

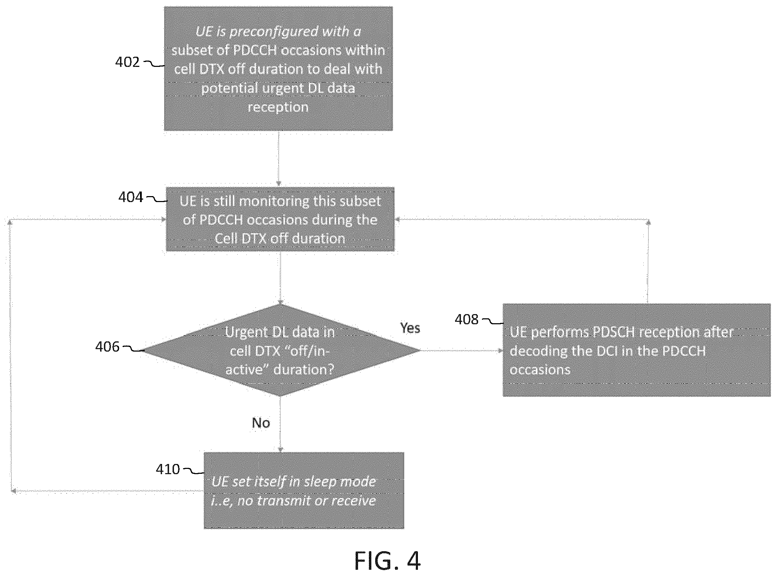

FIG. 4 is a flowchart illustrating a method for UE to receive urgent data in configured PDCCH occasions during a cell DTX inactive period, according to an embodiment. At 402, the UE may be preconfigured with a subset of PDCCH occasions within the cell DTX inactive period in order to deal with potential urgent DL data reception. At 404, the UE may monitor one PDCCH occasion of the subset of PDCCH occasions during the cell DTX inactive period. At 406, it may be determined whether urgent DL data is in the monitored PDCCH occasion of the cell DTX inactive period. When urgent DL data is in the monitored cell DTX inactive duration, the UE may perform PDSCH reception after decoding the DCI in the PDCCH occasion, at 408, before returning to monitoring at 404. When urgent DL data is not in the monitored cell DTX inactive duration, the UE returns to a sleep mode (i.e., without transmission and reception), at 410, before monitoring a next PDCCH occasion at 404.

If there is urgent UL data in a cell DRX inactive period, the UE may send an UL wake-up signal (WUS) in BS or gNB pre-configured time slots in the cell DRX inactive period, and then may follow the legacy UL scheduling procedure. The UL WUS may be an SR signal, a specific PUCCH format, an SRS signal, or a PRACH message 1 signal.

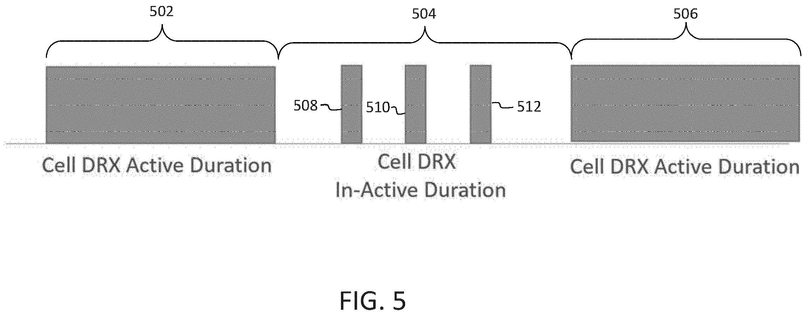

FIG. 5 is a diagram illustrating defined UL WUS occasions with a short duty cycle within the cell DRX inactive period, according to an embodiment. A first cell DRX active period 502 is followed by a cell DRX inactive period 504, which is followed by a second cell DRX active period 506. Within the cell DRX inactive period 504, are a subset of three UL WUS occasions 508, 510, and 512. The UL WUS occasions per cell DRX inactive period may be defined by one or more of a Periodicity_UL_WUS parameter, a start slot/offset_UL-WUS parameter, an active period_UL_WUS parameter, and a flag that indicates which option of UL WUS patterns is used.

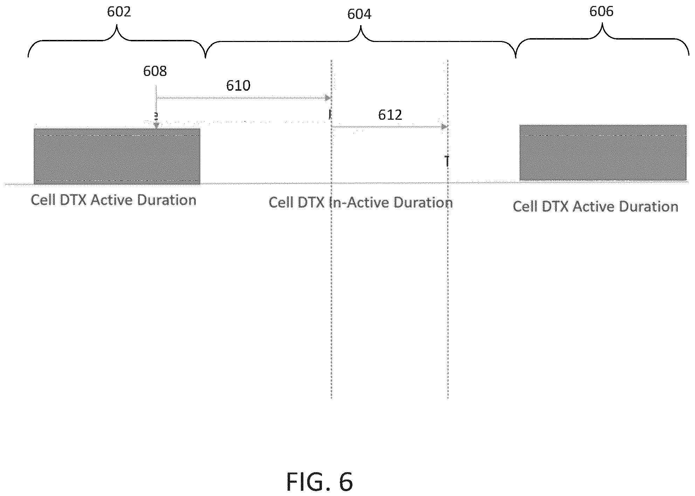

FIG. 6 is a diagram illustrating HARQ handling with respect to cell DTX, according to an embodiment. A first cell DTX active period 602 is followed by a cell DTX inactive period 604, which is followed by a second cell DTX active period 606. If a UE enters the cell DTX inactive period 604 after the UE transmits UL data 608 on the PUSCH, the UE is may temporarily return to a cell DTX active state in order to check for a re-transmission request from the BS or gNB. A Cell-DTX-HARQ-RTT-TimerUL may specify an amount of time 610 before returning to the cell DTX active state relative to the end of the PUSCH transmission 608. The UE may remain in the cell DTX active state for a period 612 defined by Cell-DTX-RetransmissionTimerUL. The UE may return to the cell DTX inactive period 604 if a retransmission request is not received during the period 612.

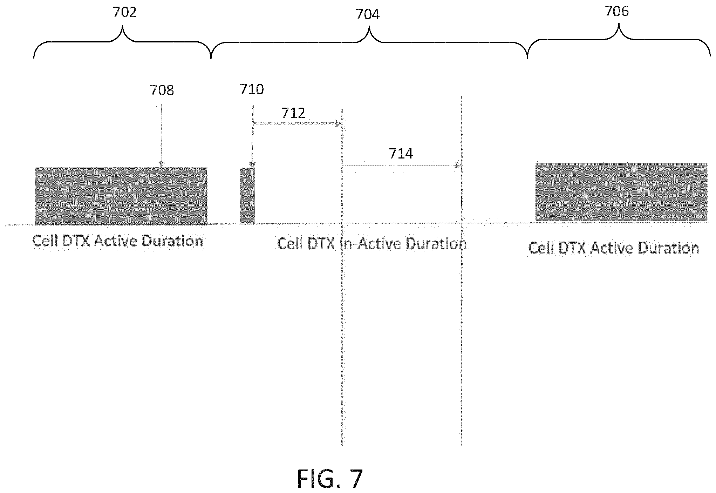

FIG. 7 is a diagram illustrating HARQ handling with respect to cell DTX, according to another embodiment. A first cell DTX active period 702 is followed by a cell DTX inactive period 704, which is followed by a second cell DTX active period 706. If a UE enters a cell DTX inactive period after receiving downlink data 708 on the PDSCH, and the UE has sent a NACK 710 for that data on the PUCCH, the UE may return to a cell DTX active state in order to receive the retransmission from the BS or gNB. In this case, a Cell-DTX-HARQ-RTTTimerDL may be started after the UE has transmitted the NACK 710 on the PUCCH, and defines an amount of time 712 before returning the to the cell DTX active state. The UE may then remain in the cell DTX active state for a period 714 defined by cell-DTX-retransmissionTimerDL while waiting to receive the retransmission.

Alternatively, all buffers for HARQ at the UE/gNB may be flushed when the gNB enters the cell DTX inactive period. The HARQ retransmission may resume only when the gNB enters the cell DTX active period. Alternatively, HARQ timers (e.g., Cell-DTX-HARQ-RTT-TimerDL and cell-DTX-retransmissionTimerDL) may not be incremented during the cell DTX inactive period, and may resume when the gNB enters the cell DTX active period.

Exception cases may also occur when an SSB signal is not transmitted in a cell DTX inactive period, where an on-demand SSB is requested by the UE when urgently needed. The UE may send an UL WUS signal on the pre-configured UL WUS occasions within the cell DTX inactive period, as described above. Thereafter, the UE may follow the legacy SSB measurement procedure within the cell DTX inactive period. The UL WUS signal may be an SR signal, a specific PUCCH format, an SRS signal, or a PRACH message 1 signal, for example. The UE may be both an RRC-connected UE or an RRC-idle/inactive UE. For the latter, the UE may transmit a PRACH as the UL WUS to trigger the on-demand SSB transmission from the gNB.

A gNB may tailor the DTX cycle according to traffic demand. This may be accomplished based on the average traffic the gNB observes, but this may not be optimal. For example, in a lightly loaded cell, there may not be enough users to obtain meaningful traffic statistics. Thus, to help the gNB optimally configure the cell DTX/DRX pattern, information may be added as UE assistance information in the RRC layer. The added information may include an indication of the UE's buffer status for UL channel transmissions, UE traffic information (e.g., service priority, delay tolerance, data rate, data volume, traffic type, time criticality, and packet size), and the UE's preferred cell DTX/DRX pattern (i.e., DTX periodicity, active-inactive duration, and DRX periodicity).

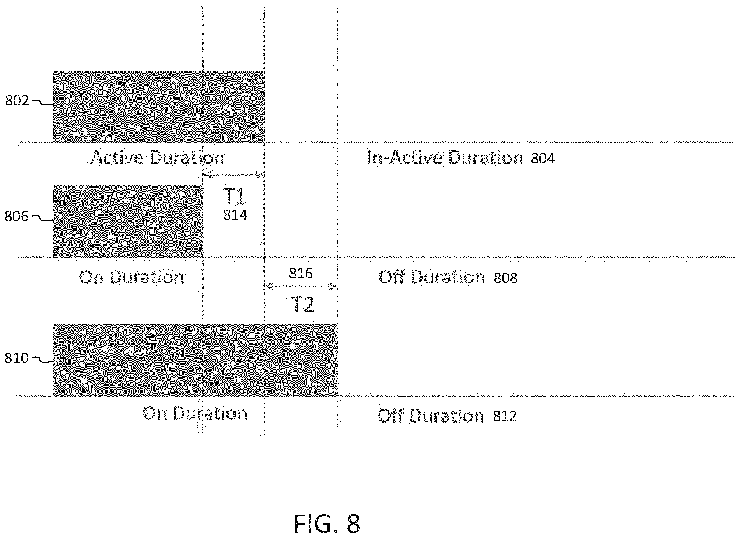

FIG. 8 is a diagram illustrating misalignment of cell DTX/DRX and UE C-DRX cycles, according to an embodiment. A cell DTX/DRX active period 802 is followed by a cell DTX/DRX inactive period 804. A UE1 C-DRX active period 806 is followed by a UE1 C-DRX inactive period 808. A UE2 C-DRX active period 810 is followed by a UE2 C-DRX inactive period 812.

A portion of the UE1 C-DRX inactive period 808 overlaps the cell DTX/DRX active period 802, and the UE may follow UE C-DRX behavior (i.e., cease monitoring PDCCH) in an overlapping duration T1 814.

A portion of the UE2 C-DRX active period 810 overlaps the cell DTX inactive period 804, and the UE behavior may follow the cell DTX in an overlapping duration T2 816, or the UE behavior may be kept unspecified in the overlapping duration T2 816. Specifically, it may be up to network implementation to ensure there is no such overlapping duration (e.g., a BS or gNB can release UE2 C-DRX so that the UE only follows the cell DTX pattern).

For a CSI report during the cell DTX/DRX inactive period, the BS or gNB may wake up to receive the CSI report when it is to be transmitted by the UE. In this case, the UE may be informed in advance by the gNB regarding which time occasions the CSI report may be sent during a cell DTX/DRX inactive period. Alternatively, the UE may not send a CSI report during the cell DTX/DRX inactive period.

For periodic CSI measurements for beam failure detection (BFD) and radio link monitoring (RLM), during the cell DTX/DRX inactive period, a UE may measure those periodic CSI-RS signals at the periodic configured time occasions to maintain the BFD and RLM during the cell DTX/DRX inactive period. Alternatively, the UE may freeze BFD and RLM timers during the cell DTX/DRX inactive period and resume the BFD and RLM timers when the cell re-enters the cell DTX/DRX active period.

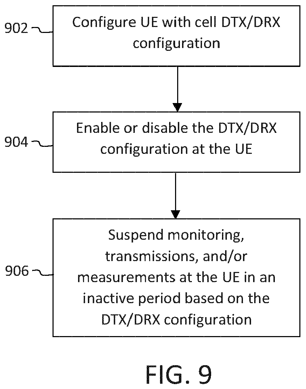

FIG. 9 is a flowchart illustrating a method for cell DTX/DRX configuration at a UE, according to an embodiment. At 902, a gNB or BS may transmit a signal to configure a UE with a cell DTX/DRX configuration. The cell DTX/DRX configuration may be defined by a DTX/DRX periodicity, a DTX/DRX starting slot or offset, and a DTX/DRX active period. The cell DTX/DRX configuration may be identified by a configuration identifier (ID).

At 904, the gNB or BS may transmit a signal that enables or disables the cell DTX/DRX configuration at the UE. The enabling or disabling is based on a cell traffic load and/or a UE QoS.

At 906, the UE may suspend monitoring, transmissions, and/or measurements in an inactive period based on the DTX/DRX configuration. The UE may suspend CSI measurement and beam management or suspend CSI reports in an inactive period. For a cell DTX configuration, the UE may suspend monitoring of a PDCCH in the inactive period. For a cell DRX configuration, the UE may suspend CG-PUSCH transmissions and SR transmissions in the inactive period. A message exchange between the UE and the BS for a random access procedure may continue through the inactive period. The UE may monitor periodic occasions in the inactive period for data with low latency requirements. The UE may maintain a C-DRX configuration in an inactive period of the C-DRX configuration that overlaps an active period of the cell DTX/DRX configuration.

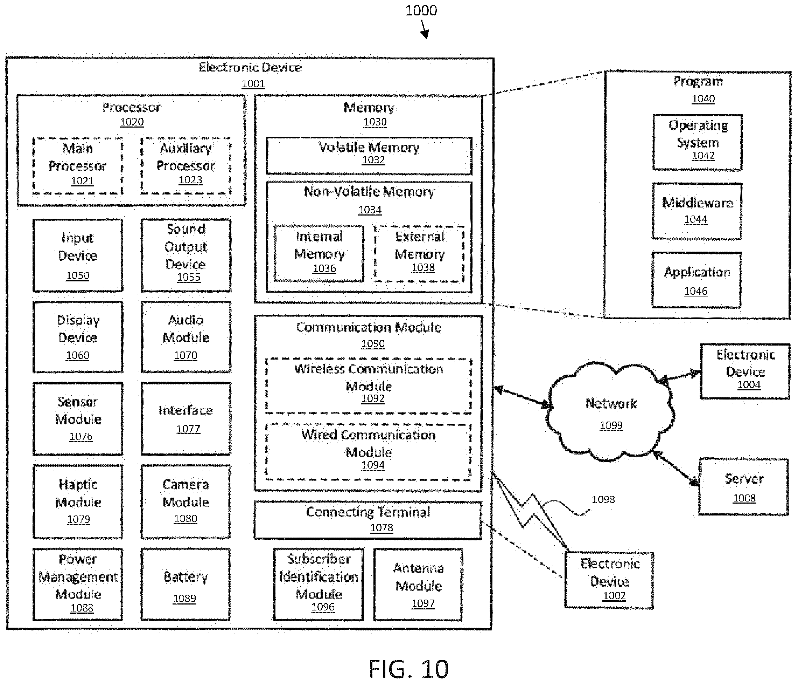

FIG. 10 is a block diagram of an electronic device in a network environment, according to an embodiment.

Referring to FIG. 10, an electronic device 1001 (e.g., a BS or a UE) in a network environment 1000 may communicate with an electronic device 1002 (e.g., a BS or a UE) via a first network 1098 (e.g., a short-range wireless communication network), or an electronic device 1004 (e.g., a BS or a UE) or a server 1008 (e.g., a BS or a UE) via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) card 1096, or an antenna module 1097. In one embodiment, at least one (e.g., the display device 1060 or the camera module 1080) of the components may be omitted from the electronic device 1001, or one or more other components may be added to the electronic device 1001. Some of the components may be implemented as a single IC. For example, the sensor module 1076 (e.g., a fingerprint sensor, an iris sensor, or an illuminance sensor) may be embedded in the display device 1060 (e.g., a display).

The processor 1020 may execute software (e.g., a program 1040) to control at least one other component (e.g., a hardware or a software component) of the electronic device 1001 coupled with the processor 1020 and may perform various data processing or computations.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). The auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. Non-volatile memory 1034 may include internal memory 1036 and/or external memory 1038.

The program 1040 may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. The display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. The audio module 1070 may obtain the sound via the input device 1050 or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. The interface 1077 may include, for example, a high- definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. The connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. The haptic module 1079 may include, for example, a motor, a piezoelectric element, or an electrical stimulator.

The camera module 1080 may capture a still image or moving images. The camera module 1080 may include one or more lenses, image sensors, image signal processors, or flashes. The power management module 1088 may manage power supplied to the electronic device 1001. The power management module 1088 may be implemented as at least part of, for example, a power management integrated circuit (PMIC).

The battery 1089 may supply power to at least one component of the electronic device 1001. The battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. The communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BLUETOOTHTM, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. The antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

Commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus.

Additionally or alternatively, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by a base station, BS (104), the method comprising:
configuring (902), by the BS (104), a user equipment, UE (106, 108), with a cell discontinuous transmission, DTX,/discontinuous reception, DRX, configuration defined by a DTX/DRX periodicity, a DTX/DRX starting slot or offset, and a DTX/DRX active period; and
enabling or disabling (904), by the BS (104), the cell DTX/DRX configuration at the UE (106, 108).

2. The method of claim 1, wherein:
enabling or disabling (904) the cell DTX/DRX configuration comprises enabling a cell DTX configuration, wherein in an inactive period (204, 304, 604, 704, 804) of the cell DTX configuration, the UE (106, 108) is configured to suspend (906) monitoring of a physical downlink control channel, PDCCH; and/or
enabling or disabling (904) the cell DTX/DRX configuration comprises enabling a cell DRX configuration, wherein in an inactive period (504) of the cell DRX configuration, the UE (106, 108) is configured to suspend (906) configured grant, CG,-physical uplink shared channel, PUSCH, transmissions and suspend (906) scheduling request, SR, transmissions; and/or
in an inactive period (804) of the cell DTX/DRX configuration, the UE (106, 108) is configured to suspend (906) at least one of periodic and semi-persistent channel state information, CSI, measurements, beam management procedures, and periodic and semi-persistent CSI reports.

3. The method of claim 1 or 2, wherein a message exchange between the UE (106, 108) and the BS (104) for a random access channel, RACH, procedure continues through an inactive period (804) of the cell DTX/DRX configuration.

4. The method of claim 3, wherein, in the inactive period (804) of the cell DTX/DRX configuration, the UE (106, 108) monitors a PDCCH for a random access response, RAR, or a contention resolution message of the RACH procedure.

5. The method of any one of claims 1 to 4, further comprising configuring, by the BS (104), the UE (106, 108) to monitor periodic occasions in an inactive period (804) of the cell DTX/DRX configuration for data with low latency requirements, wherein the periodic occasions comprise PDCCH occasions (308, 310, 312) or uplink, UL, wake-up signal occasions (508, 510, 512).

6. The method of any one of claims 1 to 5, wherein the UE (106, 108) is configured with a connected mode, C,-DRX configuration, and the UE (106, 108) maintains the C-DRX configuration in an inactive period (808) of the C-DRX configuration that overlaps an active period (802) of the cell DTX/DRX configuration.

7. A method performed by a user equipment, UE (106, 108), the method comprising:
receiving (902), by the UE (106, 108), a cell discontinuous transmission, DTX,/discontinuous reception, DRX, configuration from a base station, BS, wherein the cell DTX/DRX configuration is defined by a DTX/DRX periodicity, a DTX/DRX starting slot or offset, and a DTX/DRX active period;
receiving (902, 904), from the BS (104), a signal to enable or disable the cell DTX/DRX configuration at the UE (106, 108); and
enabling or disabling (904) the cell DTX/DRX configuration at the UE (106, 108) based on the signal.

8. The method of claim 7, wherein:
enabling or disabling (904) the cell DTX/DRX configuration comprises enabling a cell DTX configuration at the UE (106, 108), and further comprising: suspending (906) monitoring of a physical downlink control channel, PDCCH, in an inactive period (204, 304, 604, 704, 804) of the cell DTX configuration; and/or
enabling or disabling (904) the cell DTX/DRX configuration comprises enabling a cell DRX configuration at the UE (106, 108), and further comprising: suspending (906) configured grant, CG,-physical uplink shared channel, PUSCH, transmissions and scheduling request, SR, transmissions in an inactive period (504) of the cell DRX configuration; and/or
suspending (906) at least one of periodic and semi-persistent channel state information, CSI, measurements, beam management procedures, and periodic and semi-persistent CSI reports in an inactive period (804) of the cell DTX/DRX configuration.

9. The method of claim 7 or 8, wherein a message exchange between the UE (106, 108) and the BS (104) for a random access channel, RACH, procedure continues through an inactive period (804) of the cell DTX/DRX configuration.

10. The method of claim 9, wherein, in the inactive period (804) of the cell DTX/DRX configuration, the UE (106, 108) monitors a PDCCH for a random access response, RAR, or a contention resolution message of the RACH procedure.

11. The method of any one of claims 7 to 10, further comprising monitoring, by the UE (106, 108), periodic occasions in an inactive period (804) of the cell DTX/DRX configuration for data with low latency requirements, wherein the periodic occasions comprise PDCCH occasions (308, 310, 312) or uplink, UL, wake-up signal occasions (508, 510, 512).

12. The method of any one of claims 7 to 11, wherein the UE (106, 108) is configured with a connected mode, C,-DRX configuration, and further comprising maintaining the C-DRX configuration in an inactive period (808) of the C-DRX configuration that overlaps an active period (802) of the cell DTX/DRX configuration.

13. A user equipment, UE (106, 108), comprising:
a processor (1020, 1021, 1023); and
a non-transitory computer readable storage medium storing instructions that,
when executed, cause the processor (1020, 1021, 1023) to:
receive (902) a cell discontinuous transmission, DTX,/discontinuous reception, DRX, configuration from a base station, BS, wherein the cell DTX/DRX configuration is defined by a DTX/DRX periodicity, a DTX/DRX starting slot or offset, and a DTX/DRX active period;
receive (902, 904), from the BS (104), a signal to enable or disable the cell DTX/DRX configuration at the UE (106, 108); and
enable or disable (904) the cell DTX/DRX configuration at the UE (106, 108) based on the signal.

14. The UE (106, 108) of claim 13, wherein:
in enabling or disabling (904) the cell DTX/DRX configuration, the instructions cause the processor (1020, 1021, 1023) to enable a cell DTX configuration at the UE (106, 108), and the instructions further cause the processor (1020, 1021, 1023) to suspend (906) monitoring of a physical downlink control channel, PDCCH, in an inactive period (204, 304, 604, 704, 804) of the cell DTX configuration; and/or
in enabling or disabling (904) the cell DTX/DRX configuration, the instructions cause the processor (1020, 1021, 1023) to enable a cell DRX configuration at the UE (106, 108), and the instructions further cause the processor (1020, 1021, 1023) to suspend (906) configured grant, CG,-physical uplink shared channel, PUSCH, transmissions and scheduling request, SR, transmissions in an inactive period (504) of the cell DRX configuration; and/or
the instructions further cause the processor (1020, 1021, 1023) to suspend (906) at least one of periodic and semi-persistent channel state information, CSI, measurements, beam management procedures, and periodic and semi-persistent CSI reports in an inactive period (804) of the cell DTX/DRX configuration.

15. The UE (106, 108) of claim 13 or 14, wherein:
a message exchange between the UE (106, 108) and the BS (104) for a random access channel, RACH, procedure continues through an inactive period (804) of the cell DTX/DRX configuration; and/or
the instructions further cause the processor (1020, 1021, 1023) to monitor periodic occasions in an inactive period (804) of the cell DTX/DRX configuration for data with low latency requirements, wherein the periodic occasions comprise PDCCH occasions (308, 310, 312) or uplink, UL, wake-up signal occasions (508, 510, 512); and/or
the UE (106, 108) is configured with a connected mode, C,-DRX configuration, and the instructions further cause the processor (1020, 1021, 1023) to maintain the C-DRX configuration in an inactive period (808) of the C-DRX configuration that overlaps an active period (802) of the cell DTX/DRX configuration.
